# EUROPÄISCHE PATENTANMELDUNG

(11) **EP 2 851 110 A1**
(43) Veröffentlichungstag der Anmeldung: **25.03.2015**
(21) Anmeldenummer: 14182363.3
(22) Anmeldetag: 27.08.2014
(51) Int. Cl.: B01D 46/00, B01D 46/24, B01D 46/52

(54) **Filterelement und Filtersystem mit einem Filterelement**

(30) Priorität: 02.09.2013 DE 102013014490
(71) Anmelder: MANN + HUMMEL GMBH, 71638 Ludwigsburg (DE)
(72) Erfinder: Ruhland, Klaus-Dieter, 67149 Meckenheim (DE); Kaufmann, Michael, 67149 Meckenheim (DE)

(57) **Zusammenfassung**

Die Erfindung betrifft ein Filterelement (10), umfassend einen Filterkörper (12) mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), wobei die zweite Endscheibe (18) ein Kopplungselement (24) aufweist, welches beim Einbau in ein aufnehmendes Gehäuse (108) mit einem an einem Deckel (110) des Gehäuses (108) angebrachten Strömungsführungselement (122) zusammenwirkt, wodurch das Filterelement (10) axial führbar ist.

Die Erfindung betrifft ferner ein Filtersystem (100) zum auswechselbaren Einbau eines solchen Filterelements (10).

## Beschreibung

### Technisches Gebiet

Die Erfindung betrifft ein Filterelement, insbesondere zur Verwendung als Luftfilter einer Brennkraftmaschine, sowie ein Filtersystem zum Einbau eines solchen Filterelements.

### Stand der Technik

Aus der DE 20 2009 016 500 U1 ist eine Luftfilterkonstruktion bekannt, bei der zumindest an einer axialen Endscheibe des Filterelements eine Ausrichtkontur vorgesehen ist, die von der jeweiligen Endscheibe radial absteht. Komplementär dazu besitzt das Filtergehäuse eine Ausrichtgegenkontur, die mit der Ausrichtkontur des Filterelements zusammenwirkt, derart, dass das Filterelement bezüglich seiner Längsmittelachse ausschließlich in einer vorbestimmten Drehlage in das Filtergehäuse eingesetzt werden kann.

Bei bestimmten Anwendungen kann es bei Luftfiltersystemen auf ein symmetrisches Strömungsbild stromab des Filterelements ankommen. Beispielsweise kann in einer Frischluftanlage stromab des Filterelements ein Luftmassensensor, insbesondere in Form eines Heißfilmmessers, angeordnet sein, um beispielweise für eine Motorsteuerung die aktuell strömende Luftmenge zu erfassen. Wenn es aus irgendwelchen Gründen erforderlich ist, diesen Luftmassensensor relativ nahe am Filterelement zu positionieren, kann die relative Drehlage des Filterelements im Filtergehäuse einen Einfluss auf die Messung des Luftmassensensors haben. Um den Einfluss der Drehlage des Filterelements auf die Luftmassenmessung zu reduzieren, ist es möglich, den Luftmassensensor erst bei eingebautem Filterelement zu kalibrieren. Dies ist bei der Erstausstattung eines Fahrzeugs noch mit einem vertretbaren Aufwand realisierbar, wird jedoch sehr kompliziert oder sogar unmöglich für den Fall, dass das Filterelement im Rahmen einer Inspektion ausgetauscht wird. Das neu eingesetzte Filterelement hat dann regelmäßig eine andere relative Drehlage gegenüber dem Filtergehäuse und somit auch gegenüber dem Luftmassensensor, was eine erneute Kalibrierung des Luftmassensensors erforderlich macht. Der Aufwand hierzu ist vergleichsweise hoch und kann insbesondere die Materialkosten für das neue Filterelement sowie die Lohnkosten für den Austausch des Filterelements übersteigen.

### Offenbarung der Erfindung

Eine Aufgabe der Erfindung ist es, ein Filterelement zu schaffen, das eine reproduzierbare Montierbarkeit auf einfache Weise ermöglicht.

Eine weitere Aufgabe der Erfindung ist es, ein Filtersystem zur Aufnahme eines solchen austauschbaren Filterelements zu schaffen, das eine reproduzierbare Montierbarkeit auf einfache Weise ermöglicht.

Die vorgenannten Aufgaben werden nach einem Aspekt der Erfindung gelöst bei einem Filterelement, bei dem eine zweite Endscheibe ein Kopplungselement aufweist, welches beim Einbau in ein aufnehmendes Gehäuse mit einem an einem Deckel des Gehäuses angebrachten Strömungsführungselement zusammenwirkt, wodurch das Filterelement axial führbar ist.

Günstige Ausgestaltungen und Vorteile der Erfindung ergeben sich aus den weiteren Ansprüchen, der Beschreibung und der Zeichnung.

Es wird ein Filterelement vorgeschlagen, das einen Filterkörper mit einer Längsachse, eine erste an einer Stirnseite angeordnete offene oder geschlossene Endscheibe und eine zweite an der gegenüberliegenden Stirnseite angeordnete Endscheibe umfasst. Dabei weist die zweite Endscheibe ein Kopplungselement auf, welches beim Einbau in ein aufnehmendes Gehäuse mit einem an einem Deckel des Gehäuses angebrachten Strömungsführungselement zusammenwirkt, wodurch das Filterelement axial führbar ist.

Vorteilhaft wird nicht nur eine reproduzierbare Montierbarkeit des Filterelements sondern auch eine erhöhte Filtereffektivität auf einfache Weise ermöglicht.

Das Filterelement, dessen Filterkörper bestimmungsgemäß für das zu filternde Medium durchlässig gestaltet ist und der an beiden Enden durch Endscheiben abgeschlossen wird, von denen eine Endscheibe üblicherweise für das zu filternde Medium undurchlässig ist, wird vorteilhafterweise so in einem Filtersystem angeordnet, dass das zu filternde Medium, also beispielsweise staubbeladene Luft, über einen Einlass in das Gehäuse strömt und tangential am Filterelement vorbei geleitet wird. Durch die tangentiale Anströmung des Filterelements wird die Strömung in eine um das Filterelement rotierende Bewegung, eine sogenannte Zyklonbewegung, gebracht. In dieser Zyklonvorabscheidung wirken durch die Rotation der Strömung Fliehkräfte auf mögliche gröbere Staub- und Schmutzpartikel in der Luft, die dadurch zum großen Teil vorabgeschieden werden können. Das Strömungsführungselement kann dabei als eine das Filterelement umschließende, im Deckel angeordnete hohlzylinderförmige Zarge ausgeführt sein, welche die Vorabscheidung von gröberen Staub- und Schmutzpartikeln über den Zykloneffekt durch geeignete Strömungsführung begünstigt, da es das zu filternde Medium in eine Rotationsbewegung um den Filterkörper leitet.

Das Filterelement kann beim Einbau in das Gehäuse des Filtersystems in eindeutiger Lage mit seinem Kopplungselement in ein in dem Strömungsführungselement angebrachtes Zentrierelement geführt werden und ist auf diese Weise beim Schließen des Deckels auf dem Gehäuse immer in derselben Lage montiert. Das Kopplungselement kann beispielsweise als Nase an der Endscheibe ausgeführt sein. Das Kopplungselement kann günstigerweise mindestens 5%, insbesondere zwischen 5% bis 10 % des Durchmessers der Endscheibe betragen, um eine stabile und robuste Struktur darzustellen und in radialer Richtung über den Umfang der Endscheibe hinausragen.

Das Kopplungselement stellt so eine Verdrehsicherung des Filterelements dar. Das bedeutet, dass auch der Filterkörper des Filterelements immer in derselben Lage im Filtersystem positioniert ist. Filterkörper weisen üblicherweise eine Naht auf, wo das Filtermedium, beispielsweise ein Papierbalg, zu einem Zylinder zusammengeklebt oder geschweißt ist. Dieser Nahtbereich ist üblicherweise nicht durchlässig für das zu filternde Medium. Dadurch ist der Filterkörper in seinen Strömungseigenschaften nicht rotationssymmetrisch bezüglich seiner Längsachse, was wiederum bedeutet, dass der Druckverlust durch den Filterkörper und damit das Signal eines angeschlossenen Luftmassensensors, der den Verbrennungsvorgang einer stromabwärts angeordneten Brennkraftmaschine steuert, abhängig von der Einbaulage des Filterkörpers sein kann. Bei hohen Anforderungen an die Messgenauigkeit des Luftmassensensors kann dies ein Problem darstellen. Ist das Filterelement und damit der Filterkörper nur in einer Lage im Filtersystem montierbar, so kann diese Fehlerquelle ausgeschaltet werden. Da das Kopplungselement günstigerweise über einem Schmutzauslass des Gehäuses des Filtersystems angebracht ist, kann es weiter auch eine Strömungsleitfunktion für das zu filternde Medium ausüben, da die Strömung besser der gewünschten Zyklonbewegung folgen kann, sodass grobe Schmutzpartikel, welche durch den Zykloneffekt an der Gehäuseinnenwand vorabgeschieden werden können, förmlich in den Schmutzauslass geleitet werden. Das Kopplungselement übt dabei im Zusammenwirken mit dem Strömungsführungselement eine Strömungsleitfunktion auf das zu filternden Medium aus.

Auf diese Weise lässt sich der Vorabscheidegrad des Filtersystems erhöhen. Mehr noch, durch diese an einer Endscheibe des Filterelements integrierte Leitgeometrie ist es möglich, die Gesamtfiltereffektivität bezüglich Absaugunterdruck, Vorabscheidegrad und Anfangsdruckverlust durch geeignete Formgebung des Kopplungselements zu steigern. Dies stellt gegenüber dem Stand der Technik einen entscheidenden Vorteil dar, da dort keine Strömungsleitfunktion im Staubaustragbereich erfüllt wird.

Um eine günstige Montagemöglichkeit darzustellen, kann das Strömungsführungselement eine Schlitzstruktur zum Einführen des Kopplungselements aufweisen. Dadurch lässt sich das Filterelement auf einfache Weise mit dem Kopplungselement in die Schlitzstruktur des Strömungsführungselements schieben und kann dann mit dem Deckel in das Gehäuse des Filtersystems geschoben werden. Auf diese Weise ist das Filterelement nach Schließen des Deckels in einer eindeutigen Lage zum Gehäuse auch immer in derselben Lage im Gehäuse montiert. Die Schlitzstruktur kann günstigerweise als durchgehender Schlitz in axialer Richtung des Strömungsführungselements ausgeführt sein. Die Breite des Schlitzes kann bevorzugt mindestens 2%, insbesondere zwischen 2% bis 5 % größer sein als die Breite des Kopplungselements, sodass das Filterelement mit dem Kopplungselement leicht in die Schlitzstruktur geführt werden kann. Die Schlitzstruktur kann zweckmäßigerweise im Deckel so angeordnet sein, dass sie bei geschlossenem Filtergehäuse räumlich über dem Schmutzauslass zu liegen kommt, damit die über den Zykloneffekt abgeschiedenen Staubpartikel an dieser Stelle günstig ausgetragen werden können. Dazu ist die Schlitzstruktur bevorzugt in der gleichen Winkelposition wie der Schmutzauslass angeordnet. Auch kann bei dieser Anordnung der Schlitzstruktur das Kopplungselement seine strömungsbegünstigende Wirkung zum Austragen der abgeschiedenen Staubpartikel vorteilhaft ausüben.

Vorteilhafterweise kann das Kopplungselement mit der zweiten Endscheibe einstückig ausgeführt sein. Dies stellt einen sehr günstigen Weg dar, das Kopplungselement in einem Arbeitsgang beispielsweise mit der Endscheibe zu spritzen. Es stellt weiter auf diese Weise automatisch eine feste Verbindung zur Endscheibe her und lässt sich intuitiv in dem Strömungsführungselement beispielsweise in einer Schlitzstruktur montieren.

In einer weiteren Ausgestaltung kann das Kopplungselement an die zweite Endscheibe angespritzt sein. Aus herstellungstechnischen Gründen kann es auch vorteilhaft sein, die zweite Endscheibe auch für andere Filterelemente zu verwenden und deshalb das Kopplungselement in einem separaten Arbeitsgang zu fertigen und an der Endscheibe anzubringen, was wiederum auch in einem Spritzgussprozess erfolgen kann.

In einer günstigen Ausgestaltung kann der Filterkörper beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper, oder Rotationsfaltung hergestellt werden. Der Filterbalg kann beispielsweise aus Papier oder aus Zellulose oder aus einer Mischfaser aus Kunststoff und Zellulose bestehen. Der Filterbalg kann ferner mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper kann weiterhin mit einem Fadenwickel strukturell versteift sein. Der Einsatz dieser Werkstoffe als Filtermedium stellt eine sehr wirtschaftliche Möglichkeit dar, ein solches Filterelement zu realisieren. Gleichzeitig bietet die beschriebene Formgestaltung eine stabile Anordnung, sodass eine selbsttragende Bauweise des Filterkörpers und damit eine günstige Montageeigenschaft gegeben ist.

Zweckmäßigerweise kann das Filterelement als Luftfilter, insbesondere als Luftfilter einer Brennkraftmaschine verwendet werden. Der sichere Betrieb von Brennkraftmaschinen beruht auch auf einer sicheren und günstigen Filterung der Ansaugluft für den Verbrennungsbetrieb. Das beschriebene Filterelement stellt dafür eine wirtschaftliche Möglichkeit dar.

Vorteilhaft ist ebenso die Verwendung des Filterelements als Partikelfilter, insbesondere als Partikelfilter einer Brennkraftmaschine. Auch hier sind die sichere Montage und wirtschaftliche Austauschbarkeit des beschriebenen Filterelements von entscheidender Bedeutung.

Die Erfindung betrifft nach einem weiteren Aspekt ein Filtersystem mit einem erfindungsgemäßen Filterelement, umfassend ein Gehäuse, welches im Wesentlichen konzentrisch um eine Längsachse aufgebaut ist, einen das Gehäuse verschließenden Deckel, der ebenfalls konzentrisch um die Längsachse aufgebaut ist, einen am Gehäuse und/oder Deckel angeordneten Einlass zum Zuführen des zu filternden Mediums, insbesondere Luft, wobei am Gehäuse konzentrisch zur Längsachse ein Auslass zur Ableitung des gefilterten Mediums vorgesehen ist, wobei am Gehäuse im Bereich des Auslasses eine Dichtungskontur vorgesehen ist, die mit einer radialen Dichtung der ersten Endscheibe des Filterelements korrespondiert, wobei das Filterelement auswechselbar in dem Gehäuse des Filtersystems angeordnet ist. Der wesentliche Vorteil eines solchen Filtersystems liegt dabei in der sicheren und stabilen Montage des Filterelements sowie einer sehr wirtschaftlichen Austauschbarkeit des Filterelements im Servicefall. Gerade bei niedrigen Standzeiten, wie sie im Land- und Baumaschineneinsatz auftreten können, ist die schnelle Austauschbarkeit von großer Bedeutung.

Vorteilhafterweise kann im Bereich des Einlasses des Filtersystems ein Zyklonabscheider vorgesehen sein und am Gehäuse oder am Deckel ein Schmutzauslass vorgesehen sein. Dieser Zyklonabscheider umfasst eine Leitgeometrie, entlang derer das tangential einströmende, zu filternde Medium in eine Rotation versetzt wird. Beispielsweise ist die Leitgeometrie durch eine von der den Einlass umgebende, ringförmige Wand gebildet, die das Filterelement im Bereich eines bevorzugt tangentialen Lufteinlasses umgibt, so dass zwischen Wand und Gehäusewand ein ringförmiger Strömungskanal entsteht. Alternativ kann auch das Filterelement an seiner äußeren Mantelfläche zumindest einen fluiddichten Bereich aufweisen, der für das zu filternde Medium undurchlässig ist und der analog zusammen mit der Gehäusewand einen ringförmigen Strömungskanal bildet. Dieser kann beispielsweise durch einen auf der Mantelfläche aufliegenden, im Bereich des Strömungseintritts den Filterkörper umschließenden Folienmantel gebildet sein, beispielsweise aus einer Kunststofffolie, die mit der Filterelementendscheibe verbunden bzw. mit dieser verschweißt oder in diese eingegossen ist. Durch diese Rotation in diesem Strömungskanal wird der Schmutz im Bereich der Gehäusewand aufkonzentriert und an einer geeigneten Stelle über einen Schmutzauslass ausgetragen. Durch die Vorabscheidung des größten Teils an Schmutz aus der zu filternden Luft kann die Standzeit des eigentlichen Filterelements entscheidend verlängert werden.

Gemäß einer weiteren Ausgestaltung der Erfindung kann ein Sekundärelement im Inneren des Filterelements angeordnet sein. Das Sekundärelement, das aus einer tragenden Struktur in zylinderförmiger Ausgestaltung bestehen kann, die mit einem durchlässigen Filtermedium, beispielsweise einem Vlies, verkleidet ist, hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement, das konzentrisch zur Längsachse des Filtersystems im Inneren des Filterelements angeordnet sein kann, ist beispielsweise über eine Schraubverbindung mit dem Gehäuse verbunden und zum Gehäuse mit einer Dichtung versehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines Filtersystems nach einem Ausführungsbeispiel der Erfindung mit tangentialem Einlass, zentrischem Auslass und bodenseitigem Schmutzauslass;
- Fig. 2: einen Längsschnitt durch ein Filtersystem nach einem Ausführungsbeispiel der Erfindung;
- Fig. 3: ein Filterelement mit einem an einer zweiten Endscheibe angebrachten Kopplungselement nach einem Ausführungsbeispiel der Erfindung;
- Fig. 4: eine Innenansicht eines Deckels eines Gehäuses eines Filtersystems nach einem Ausführungsbeispiel der Erfindung, bei dem ein Strömungsführungselement mit Schlitzstruktur zu Ankopplung des Filterelements dargestellt ist;
- Fig. 5: eine Teilansicht eines Filtersystems nach einem Ausführungsbeispiel der Erfindung, bei dem ein Filterelement dargestellt ist, welches mit einem Kopplungselement in eine Schlitzstruktur eines an einem Deckel eines Gehäuses angebrachten Strömungsführungselements eingeführt ist.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

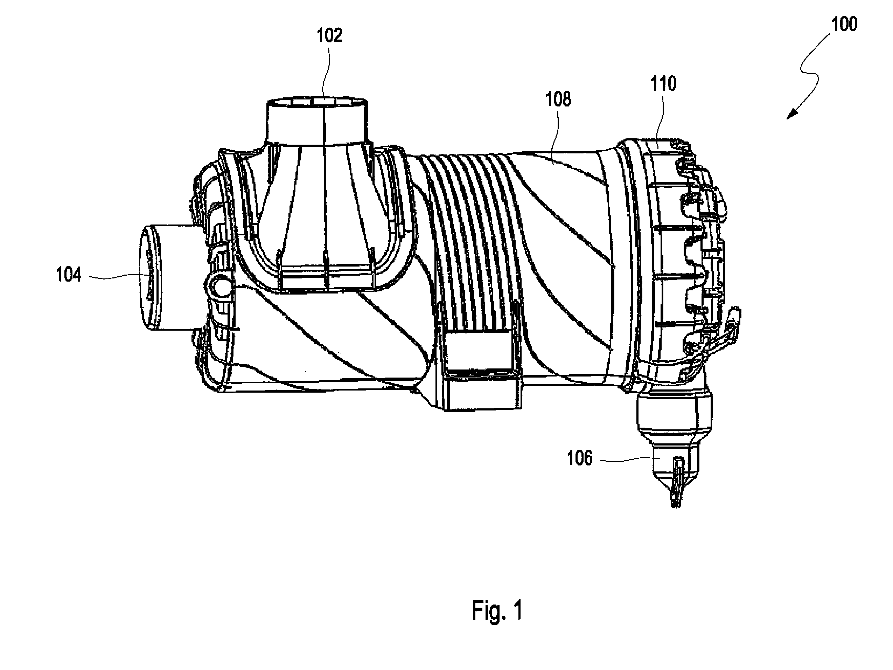

Figur 1 zeigt eine perspektivische Ansicht eines Filtersystems 100 nach einem Ausführungsbeispiel der Erfindung, das beispielsweise als Luftfilter einer Brennkraftmaschine eingesetzt sein kann, mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

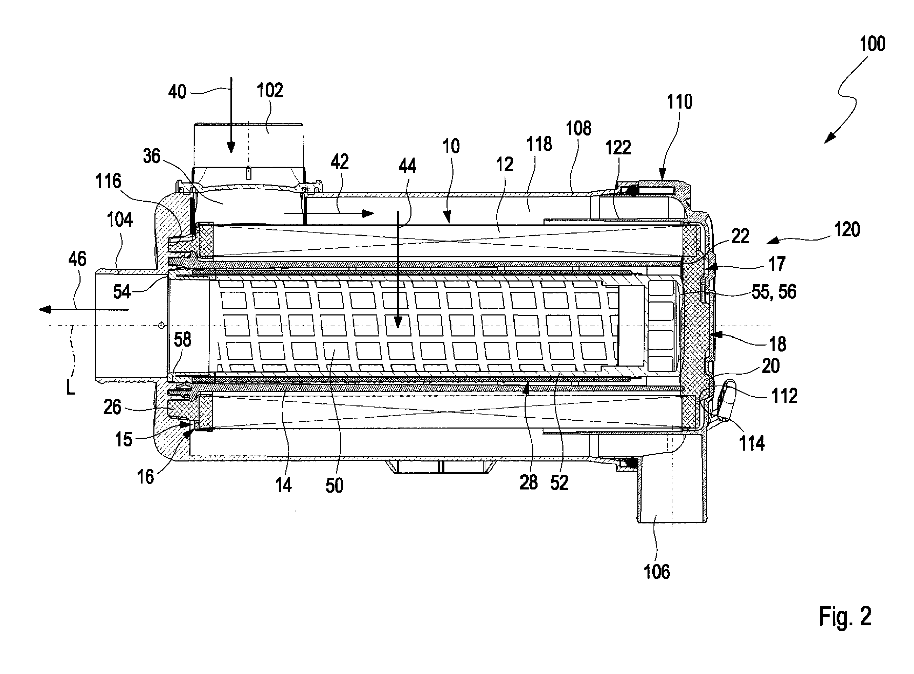

In Figur 2 ist ein Längsschnitt durch ein Filtersystem 100 nach einem Ausführungsbeispiel der Erfindung mit tangentialem Einlass 102, zentrischem Auslass 104 und bodenseitigem Schmutzauslass 106 dargestellt. Das Gehäuse 108 des Filtersystems 100 ist an der Stirnseite 120 mit einem Deckel 110 verschlossen. Ein Filterelement 10, das im Wesentlichen aus einem um die Längsachse L konzentrischen Filterkörper 12 besteht, ist an zwei gegenüberliegenden Stirnseiten 15, 17 mit einer ersten offenen und einer zweiten Endscheibe 16, 18, die beispielsweise aus Polyurethanschaum oder einem Elastomer ausgeführt sein können, abgeschlossen. Der Filterkörper 12 kann beispielsweise aus einem zickzackförmig gefalteten (plissierten) Filterbalg bestehen und ringförmig geschlossen ausgeführt sein. Die Faltung kann beispielsweise durch Messerfaltung, für längere Filterkörper 12, oder Rotationsfaltung hergestellt werden. Der Filterbalg kann beispielsweise aus Papier, Zellulose oder einer Mischfaser aus Kunststoff und Zellulose bestehen und mit glatter Oberfläche, rolliert und/oder in verschiedenen Prägeformen gestalteter Oberfläche zur Versteifung und/oder Schaffung von Hohlräumen zur Staubablagerung ausgeführt sein. Der Filterbalg kann eine Beschichtung und/oder Imprägnierung aufweisen, um Feuchtigkeit abzuweisen. Er kann alternativ auch mit Nanofasern beschichtet sein. Der Filterkörper 12 kann weiterhin mit einem Fadenwickel strukturell versteift sein.

Das Filterelement 10 ist mit einem Kopplungselement, das in dem gezeigten Schnitt nicht zu sehen ist, in ein Strömungsführungselement 122, welches hohlzylinderförmig ausgeführt ist und am Deckel 110 angebracht ist, geführt und auf diese Weise in einer verdrehsicheren und eindeutigen Lage relativ zum Gehäuse 108 des Filtersystems 100 positioniert, da auch der Deckel 110 in einer eindeutigen Lage zum Gehäuse 108, beispielsweise über einen Bajonettverschluss, positioniert ist. Auf diese Weise ist das Filterelement 10 immer in derselben Lage montierbar und kann sich auch bei Vibrationen beispielsweise im Betrieb an einer Brennkraftmaschine nicht bewegen.

Die zweite Endscheibe 18 weist Abstütznoppen 20 auf, welche radial nach außen erstreckend kreisförmig um die Längsachse L angeordnet sind und bei einem Einbau in das aufnehmende Gehäuse 108 an einer inneren Deckelkontur 114 des Deckels 110 anliegend sich an dem Gehäuse 108 axial abstützen. Im Inneren 50 des Filterelements 10 ist ein gehäusefestes Stützrohr 14 um die Längsachse L konzentrisch angeordnet und an dem auslassseitigen Ende des Stützrohrs 14 fest mit dem Gehäuse 108 verbunden. Die dem Stützrohr 14 zugewandte Fläche der zweiten Endscheibe 18 liegt auf dem offenen, der Endscheibe 18 zugewandten, Ende des Stützrohrs 14 auf. Wenn beim Schließen des Deckels 110 die innere Deckelkontur 114 des Deckels 110 auf die Endscheibe 18 drückt, wird diese Kraft durch die Endscheibe 18 über die Abstütznoppen 20 auf die Endscheibe 18 durchgeleitet, da sich diese auf dem Stützrohr 14 abstützen kann. Auf diese Weise ist das Filterelement 10 über die zweite Endscheibe 18 axial gegen den Deckel 110 und damit gegen das Gehäuse 108 verspannt und erfährt dadurch eine Festlagerung an der Stirnseite 17, dem deckelseitigen Ende des Filterelements 10.

Weiter sind in der inneren Deckelkontur 114 rippenförmige Erhebungen 112 angebracht, mit denen sich der elastische Werkstoff der zweiten Endscheibe 18 verzahnen oder verkrallen kann, sodass das Filterelement 10 dadurch gegen mögliche Verdrehungen bei Vibrationen im Betrieb gesichert ist. Weiter sind auch an dem der Endscheibe 18 zugewandten Ende des Stützrohrs 14 Aussparungen 22 denkbar, welche eine weitere Verzahnung oder Verkrallung des Stützrohrs 14 mit der Endscheibe 18 ermöglichen, um so eine weitere Verdrehsicherung des Filterelements 10 durch Vibrationen zu gewährleisten.

An der gegenüberliegenden Stirnseite 15 des Filterelements 10 ist an der ersten Endscheibe 16 eine Radialdichtung 26 angebracht, die mit einer Dichtungskontur 116 des Gehäuses 108 korrespondiert und mit deren Hilfe das Filterelement 10 den ungefilterten gegen den gefilterten Luftraum abdichtet.

Staubbeladene Luft kann durch den Einlass 102 in Pfeilrichtung 40 einströmen, der in diesem Fall als tangentialer Einlass dargestellt ist und durch die mit Hilfe eines Zyklonabscheiders 36 bewirkte Rotationsbewegung der Luft einen Zyklonbetrieb ermöglicht. Staubpartikel können durch die Rotationsbewegung teilweise vorabgeschieden sich an der inneren Gehäusewand ablagern und durch den Schmutzauslass 106 bei Einbau des Filtergehäuses 108 in waagrechter Lage nach unten durch die Schwerkraft aus dem Filtersystem 100 entleert werden. Diese Vorabscheidung findet in einem Innenbereich 118 des Gehäuses, bevorzugt an der Innenwand des Gehäuses 108, statt, in dem die staubbeladene Luft frei strömen kann.

Die Luft strömt beim Betrieb dann weiter nach Teilabscheidung der Staubpartikel durch den Filterkörper 12 in Pfeilrichtung 42, 44 ins Innere 50 des Filterelements. Staubpartikel bleiben dabei je nach Filtermedium ab einer bestimmten Größe im Filtermedium hängen. Je nach Staubeintrag muss deshalb das Filterelement 10 nach einer gewissen Standzeit ausgetauscht werden. Über den Auslass 104 strömt die gefilterte Luft in Pfeilrichtung 46 ab.

Im Inneren 50 des Filterelements 10 ist ein Sekundärelement 28 angebracht, das im Wesentlichen aus einer tragenden Struktur, dem Körper 52 mit einem relativ durchlässigen Filtermedium, beispielsweise einem Vlies, besteht und beim Austausch des Filterelements 10 im Gehäuse 108 zum Schutz der weiteren Luftführung, beispielsweise einer Brennkraftmaschine, gegen eindringende Staubpartikel und andere Gegenstände verbleibt. Das Sekundärelement 28 ist mit dem offenen Ende 54 in einen Gehäusesitz 58 am auslassseitigen Teil des Gehäuses 108 gesteckt. Auf dem geschlossenen Ende 55 des Sekundärelements 28 liegt die zweite Endscheibe 18 des Filterelements 10 auf, wodurch beim Schließen des Gehäusedeckels 110 eine Kraft über die Abstütznoppen 20 der Endscheibe 18 in das geschlossene Ende 55 des Sekundärelements 28, das als Handgriff 56 ausgebildet ist, mit dem es aus dem Gehäusesitz 58 und damit dem Gehäuse 108 auch wieder entfernt werden kann, geleitet werden kann und das Sekundärelement 28 so fest in seinen Gehäusesitz 58 gepresst wird.

Derartige Filtersysteme wie in Figur 1 und 2 dargestellt, werden üblicherweise im Baumaschinen- und Landmaschinenbereich eingesetzt. Sie zeichnen sich durch große Robustheit aus und weisen wegen der hohen Filterlast kurze Standzeiten auf. Ein Filtersystem mit beladenem Filterelement muss dabei einen Gewichtszuwachs von 10 kg oder mehr tolerieren.

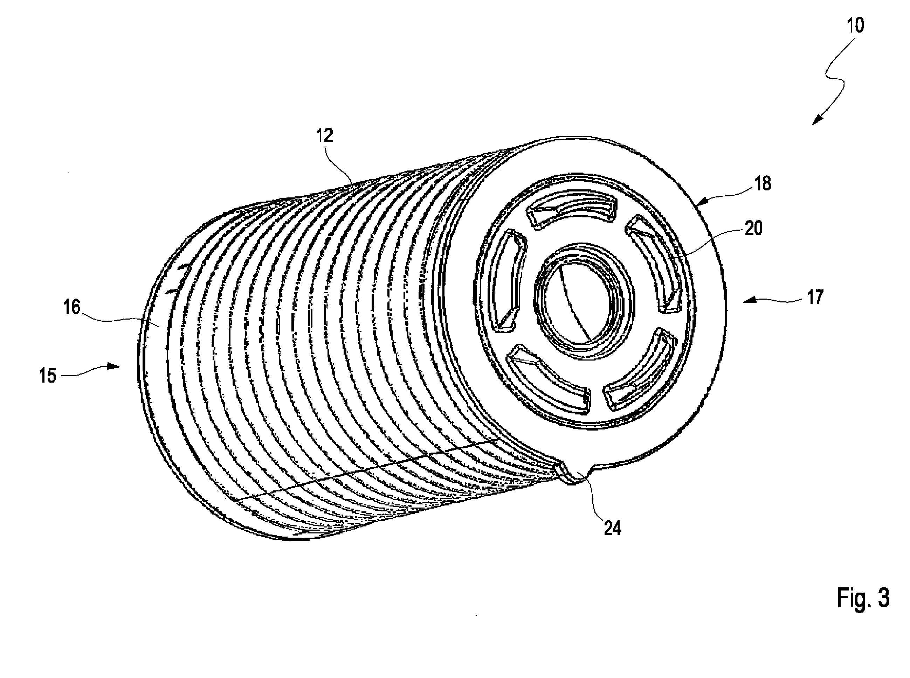

Figur 3 zeigt ein Filterelement 10 mit einem an einer zweiten Endscheibe 18 angebrachten Kopplungselement 24 nach einem Ausführungsbeispiel der Erfindung. Das Filterelement 10 besteht aus einem Filterkörper 12, der an den beiden Stirnseiten 15, 17 mit den Endscheiben 16, 18 abgeschlossen ist. Die zweite Endscheibe 18 weist an der Oberseite Abstütznoppen 20 für eine axiale und radiale Verspannung in einem Gehäuse auf, wenn das Filterelement 10 eingesetzt ist und das Gehäuse von außen mit einem Deckel verschlossen wird, an dem sich das Filterelement 10 mit den Abstütznoppen 20 der Endscheibe 18 verspannen und verzahnen kann. Das Kopplungselement 24 ist in der Figur 3 als integraler Bestandteil der Endscheibe 18 dargestellt, ist also beispielsweise einstückig mit der Endscheibe 18 in einem Spritzgussprozess hergestellt worden. Das Kopplungselement 24 kann jedoch auch angespritzt werden oder in einem separaten Arbeitsschritt an die Endscheibe 18 angefügt werden. Es kann auch durchaus aus anderem Material als die Endscheibe 18 sein; so kann es beispielsweise vorteilhaft sein, wenn es aus besonders festem Werkstoff gefertigt ist. Das Kopplungselement 24 kann wie gezeigt als Nase an der Endscheibe 18 ausgeführt sein. Das Kopplungselement 24 kann günstigerweise etwa 5% bis 10% des Durchmessers der Endscheibe 18 betragen, um eine stabile und robuste Struktur darzustellen und in radialer Richtung über den Umfang der Endscheibe 18 hinausragen.

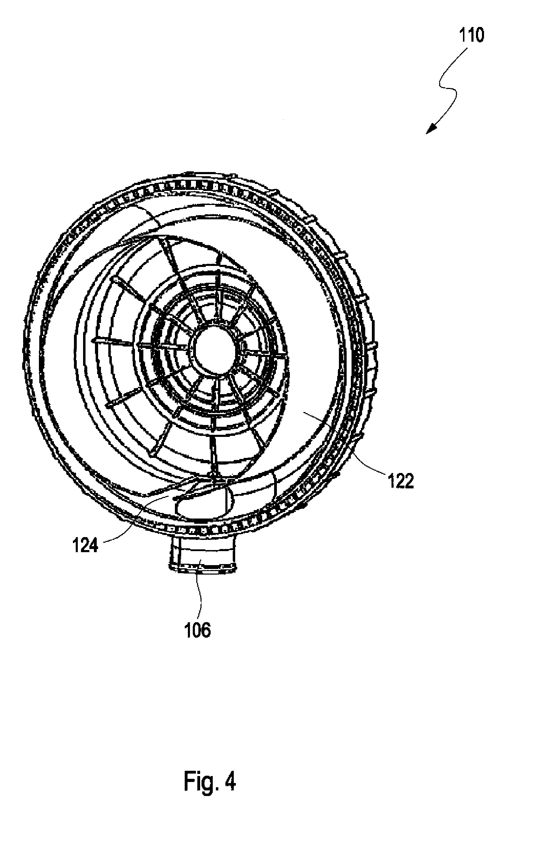

Figur 4 zeigt eine Innenansicht eines Deckels 110 eines Gehäuses eines Filtersystems nach einem Ausführungsbeispiel der Erfindung, bei dem eine Schlitzstruktur 124 in einem Strömungsführungselement 122 zur Führung eines Kopplungselements eines Filterelements dargestellt ist. Man erkennt in der Innenansicht ein als eine hohlzylinderförmige Zarge ausgeführtes Strömungsführungselement 122, das Bestandteil des Deckels 110 darstellt und darin eine Schlitzstruktur 124, die zum Einführen eines Kopplungselements eines Filterelements dient und damit auch für eine Verdrehsicherung des Filterelements im Betrieb des Filtersystems beispielsweise in einem Kraftfahrzeug dient, bei dem naturgemäß Schwingungen auftreten. An einer Seite des Deckels 110 erkennt man einen dort angebrachten Schmutzauslass 106. Das Strömungsführungselement 122 ist dabei als eine das Filterelement 10 umschließende im Deckel 110 angeordnete hohlzylinderförmige Zarge ausgeführt, welche die Vorabscheidung von gröberen Staub- und Schmutzpartikeln über den Zykloneffekt durch geeignete Strömungsführung begünstigt, da es das zu filternde Medium in eine Rotationsbewegung um den Filterkörper 12 leitet. Die Schlitzstruktur 124 kann günstigerweise als durchgehender Schlitz in axialer Richtung des Strömungsführungselements 122 ausgeführt sein. Die Breite des Schlitzes kann beispielsweise 2% bis 5% größer sein als die Breite des Kopplungselements 24, sodass das Filterelement 10 mit dem Kopplungselement 24 leicht in die Schlitzstruktur 124 geführt werden kann. Die Schlitzstruktur 124 ist zweckmäßigerweise im Deckel 110 so angeordnet, dass sie bei geschlossenem Filtergehäuse 108 über dem Schmutzauslass 106 zu liegen kommt, damit die über den Zykloneffekt abgeschiedenen Staubpartikel an dieser Stelle günstig ausgetragen werden können. Auch kann bei dieser Anordnung der Schlitzstruktur 124 das Kopplungselement 24 seine strömungsbegünstigende Wirkung zum Austragen der abgeschiedenen Staubpartikel vorteilhaft ausüben.

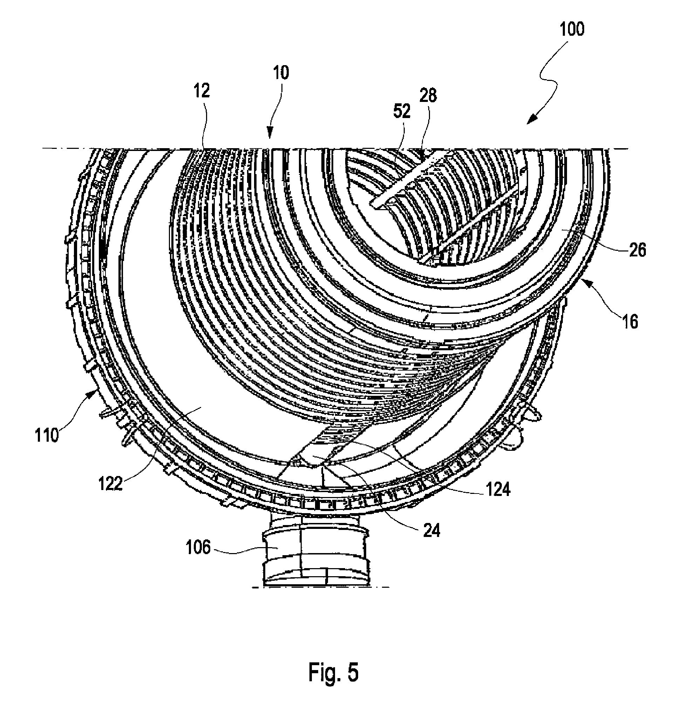

Figur 5 zeigt eine Teilansicht eines Filtersystems 100 nach einem Ausführungsbeispiel der Erfindung, bei dem ein Filterelement 10 dargestellt ist, welches mit einem Kopplungselement 24 in eine Schlitzstruktur 124 eines Strömungsführungselements 122 eingeführt ist, welches an einem Deckel 110 eines Gehäuses angebracht ist. Das Filterelement 10, von dem ein Filterkörper 12 sowie eine daran angebrachte erste Endscheibe 16 mit einer Radialdichtung 26 zu sehen sind, ist in eine an dem Deckel 110 angebrachte Zarge als Strömungsführungselement 122 eingeführt, wobei das Kopplungselement 24 in die Schlitzstruktur 124 geführt und damit das Filterelement 10 auf diese Weise zentriert wird. Diese Anordnung stellt zugleich eine Verdrehsicherung des Filterelements während dem Betrieb des Filtersystems sicher, bei dem erhebliche Schwingungsbelastungen durch Strömungseffekte des zu filternden Mediums wie auch durch Vibrationen durch Brennkraftmaschinen, an die das Filtersystem 100 angeschlossen ist, auftreten können. An der unteren Seite des Deckels 110 ist ein Schmutzauslass 106 zu erkennen. Das Kopplungselement 24 kann im Zusammenwirken mit dem Strömungsführungselement 122 eine Strömungsleitfunktion auf das zu filternde Medium ausüben, da die Strömung des zu filternden Mediums in einer Zyklonbewegung zwischen Gehäusewand und dem Strömungsführungselement 122 geführt wird. Bei dieser Zyklonvorabscheidung werden gröbere Schmutzpartikel in der Strömung an der inneren Gehäusewand abgelagert und können so von der Strömung über dem Kopplungselement 24, das direkt über dem Schmutzauslass 106 angebracht ist, in den Schmutzauslass 106 geleitet werden. Günstig wirkt sich bei dieser Strömungsleitfunktion die ebenfalls über dem Schmutzauslass 106 angebrachte Schlitzstruktur 124 aus, da die Schlitzstruktur 124 für das zu filternde Medium durchlässig ist und so die Strömung an dieser Stelle bevorzugt in den Filterkörper 12 geführt wird, wobei aber schwerere Schmutzpartikel durch den Zykloneffekt an der Gehäuseinnenwand entlang in den Schmutzauslass 106 fallen können.

## Patentansprüche

1. Filterelement (10), umfassend einen Filterkörper (12) mit einer Längsachse (L), eine erste an einer Stirnseite (15) angeordnete offene oder geschlossene Endscheibe (16) und eine zweite an der gegenüberliegenden Stirnseite (17) angeordnete Endscheibe (18), wobei die zweite Endscheibe (18) ein Kopplungselement (24) aufweist, welches beim Einbau in ein aufnehmendes Gehäuse (108) mit einem an einem Deckel (110) des Gehäuses (108) angebrachten Strömungsführungselement (122) zusammenwirkt, wodurch das Filterelement (10) axial führbar ist.

2. Filterelement nach Anspruch 1, wobei das Kopplungselement (24) eine Verdrehsicherung des Filterelements (10) bildet.

3. Filterelement nach Anspruch 1 oder 2, wobei das Kopplungselement (24) im Zusammenwirken mit dem Strömungsführungselement (122) eine Strömungsleitfunktion auf das zu filternden Medium ausübt.

4. Filterelement nach Anspruch 3, wobei das Kopplungselement (24) im Zusammenwirken mit dem Strömungsführungselement (122) eine Strömungsführung des zu filternden Mediums zu einem Schmutzauslass (106) des Gehäuses (108) bewirkt.

5. Filterelement nach einem der vorhergehenden Ansprüche, wobei das Kopplungselement (24) mit der zweiten Endscheibe (18) einstückig ausgeführt und/oder an diese angespritzt ist.

6. Filterelement nach einem der vorhergehenden Ansprüche, wobei der Filterkörper (12) zickzackförmig gefaltet, ringförmig geschlossen ausgeführt ist und vorzugsweise aus Papier oder aus Zellulose oder aus einer Mischfaser aus Kunststoff und Zellulose besteht.

7. Verwendung eines Filterelements (10) nach einem der vorhergehenden Ansprüche als Luftfilter, insbesondere als Luftfilter einer Brennkraftmaschine.

8. Filtersystem (100) mit einem Filterelement (10) nach einem der vorhergehenden Ansprüche, umfassend
- ein Gehäuse (108), welches im Wesentlichen konzentrisch um eine Längsachse (L) aufgebaut ist,
- einen das Gehäuse (108) verschließenden Deckel (110), der ebenfalls konzentrisch um die Längsachse (L) aufgebaut ist,
- einen am Gehäuse (108) und/oder Deckel (110) angeordneten Einlass (102) zum Zuführen des zu filternden Mediums, insbesondere Luft,
wobei am Gehäuse (108) konzentrisch zur Längsachse (L) ein Auslass (104) zur Ableitung des gefiltertem Mediums vorgesehen ist, wobei am Gehäuse (108) im Bereich des Auslasses (104) eine Dichtungskontur (116) vorgesehen ist, die mit einer radialen Dichtung (26) der ersten Endscheibe (16) des Filterelements (10) korrespondiert, wobei das Filterelement (10) auswechselbar in dem Gehäuse (108) des Filtersystems (100) angeordnet ist.

9. Filtersystem nach Anspruch 8, wobei im Bereich des Einlasses (102) ein Zyklonabscheider (36) vorgesehen ist und am Gehäuse (108) oder am Deckel (110) ein Schmutzauslass (106) vorgesehen ist.

10. Filtersystem nach Anspruch 8 oder 9, wobei am dem Einlass (102) gegenüberliegenden Gehäuseteil (108, 110) ein Strömungsführungselement (122) insbesondere mit einer Schlitzstruktur (124) zum Einführen des Kopplungselements (24) vorgesehen ist.

11. Filtersystem nach Anspruch 10, wobei die Schlitzstruktur (124) in der gleichen Winkelposition wie der Schmutzauslass (106) angeordnet ist.
